# EUROPEAN PATENT APPLICATION

(11) **EP 4 274 361 A1**
(43) Date of publication of application: **08.11.2023**
(21) Application number: 22210304.6
(22) Date of filing: 29.11.2022
(51) Int. Cl.: H04W 76/14, H04W 88/04, H04W 8/00

(54) **SIDELINK COMMUNICATION RELAY METHOD AND APPARATUS THEREFOR**

(30) Priority: 03.05.2022 KR 20220054947
(71) Applicant: LG Electronics, Inc., Yeongdeungpo-gu Seoul 07336 (KR)
(72) Inventor: BACK, Seoyoung, 06772 Seoul (KR); LEE, Youngdae, 06772 Seoul (KR); LEE, Seungmin, 06772 Seoul (KR); PARK, Giwon, 06772 Seoul (KR)
(74) Representative: Mooser, Sebastian Thomas

(57) **Abstract**

The present disclosure relates to a method of relaying, by a second user equipment (UE), sidelink communication between a first UE and a third UE in a wireless communication system and apparatus therefor. To this end, the second UE may: receive a first sidelink radio resource control (RRC) reconfiguration message from the first UE; transmit a first sidelink RRC reconfiguration complete message to the first UE in response to the first sidelink RRC reconfiguration message; transmit a second sidelink RRC reconfiguration message to the third UE based on the transmission of the first sidelink RRC reconfiguration complete message; monitor a second sidelink RRC reconfiguration result message to be received from the third UE during a running period of a first timer running after the transmission of the second sidelink RRC reconfiguration message; and transmit an RRC connection result notification message to the first UE based on the monitoring of the second sidelink RRC reconfiguration result message.

## Description

### BACKGROUND

### Field

The present disclosure relates to a sidelink communication method in a wireless communication system, and more particularly, to a method of efficiently performing a sidelink radio resource control (RRC) procedure when sidelink user equipment-to-user equipment (UE-to-UE) relaying is performed and apparatus therefor.

### Discussion of the Related Art

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

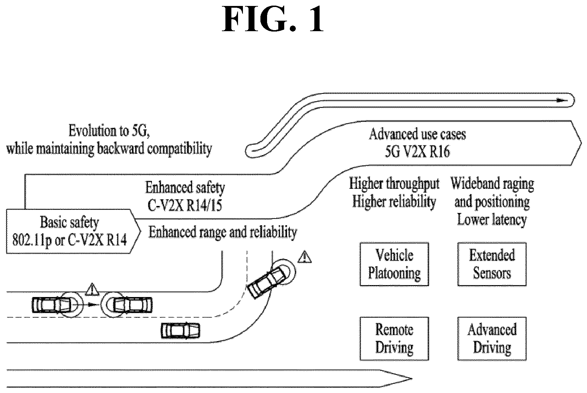

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

### SUMMARY OF THE DISCLOSURE

Accordingly, the present disclosure is directed to a sidelink communication relay method and apparatus therefor that substantially obviates one or more problems due to limitations and disadvantages of the related art.

In 3GPP specifications related to sidelink communication described above, a sidelink user equipment-to-user equipment (UE-to-UE) relay technology is being discussed. Specifically, the technology is that when a source UE is incapable of directly communicating with a target UE, a specific UE is allowed to serve as a relay UE to achieve sidelink communication between the UEs.

The object of the present disclosure is to provide a radio resource control (RRC) procedures performed by RRC layers for sidelink UE-to-UE relaying described above and messages and timers to be added accordingly. In addition, device configurations therefor will also be described.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, there is provided a method of relaying, by a second user equipment (UE), sidelink communication between a first UE and a third UE in a wireless communication system. The method may include: receiving a first sidelink radio resource control (RRC) reconfiguration message from the first UE; transmitting a first sidelink RRC reconfiguration complete message to the first UE in response to the first sidelink RRC reconfiguration message; transmitting a second sidelink RRC reconfiguration message to the third UE based on the transmission of the first sidelink RRC reconfiguration complete message; monitoring a second sidelink RRC reconfiguration result message to be received from the third UE during a running period of a first timer running after the transmission of the second sidelink RRC reconfiguration message; and transmitting an RRC connection result notification message to the first UE based on the monitoring of the second sidelink RRC reconfiguration result message.

Preferably, the RRC connection result notification message may be different from the first sidelink RRC reconfiguration complete message.

The RRC connection result notification message may include a field indicating: whether the second UE receives the second sidelink RRC reconfiguration result message from the third UE during the running period of the first timer; or whether the second sidelink RRC reconfiguration result message received from the third UE is a sidelink RRC reconfiguration failure message.

Preferably, the first sidelink RRC reconfiguration complete message may be transmitted to the first UE before expiration of the first timer running after the first UE transmits the first sidelink RRC reconfiguration message.

The third UE may receive a plurality of direct communication request (DCR) messages from a plurality of UEs including the second UE, and the method may further include selecting any one from among the plurality of UEs transmitting the plurality of DCR messages as the second UE.

The third UE may run a second timer based on reception of a first DCR message among the plurality of DCR messages. The selection may be performed after expiration of the second timer, and a range of the selection may be limited to the plurality of DCR messages received before the expiration of the second timer.

The first UE may receive a plurality of direct communication accept (DCA) messages from a plurality of UEs including the second UE. The method may further include selecting any one from among the plurality of UEs transmitting the plurality of DCA messages as the second UE.

The first UE may run a third timer based on reception of a first DCA message among the plurality of DCA messages. The selection may be performed after expiration of the third timer, and a range of the selection may be limited to the plurality of DCA messages received before the expiration of the third timer.

When the first UE is in a first mode operating within coverage of a base station, the first UE may report the second UE as a destination Layer-2 (L2) identifier (ID) to the base station.

When the second UE receives a sidelink RRC release message from one of the first UE and the third UE, the second UE may transmit information on the sidelink RRC release message reception to the other one of the first UE and the third UE.

In another aspect of the present disclosure, there is provided a method of relaying, by a second UE, sidelink communication between a first UE and a third UE in a wireless communication system. The method may include: receiving a first sidelink RRC reconfiguration message from the first UE; transmitting a second sidelink RRC reconfiguration message to the third UE based on the first sidelink RRC reconfiguration message; receiving a second sidelink RRC reconfiguration result message from the third UE during a running period of a first timer running after the transmission of the second sidelink RRC reconfiguration message; and transmitting a first sidelink RRC reconfiguration result message to the first UE based on the second sidelink RRC reconfiguration result message. In this case, success or failure of the first sidelink RRC reconfiguration result message may be determined depending on whether the first UE receives the first sidelink RRC reconfiguration result message before expiration of a second timer running after the first UE transmits the first sidelink RRC reconfiguration message, and the second timer may be set longer than the first timer.

In another aspect of the present disclosure, there is provided a second UE configured to relay sidelink communication between a first UE and a third UE in a wireless communication system. The second UE may include: at least one processor; and at least one computer memory operably connectable to the at least one processor and configured to store instructions that, when executed, cause the at least one processor to perform operations. The operations may include: receiving a first sidelink RRC reconfiguration message from the first UE; transmitting a first sidelink RRC reconfiguration complete message to the first UE in response to the first sidelink RRC reconfiguration message; transmitting a second sidelink RRC reconfiguration message to the third UE based on the transmission of the first sidelink RRC reconfiguration complete message; monitoring a second sidelink RRC reconfiguration result message to be received from the third UE during a running period of a first timer running after the transmission of the second sidelink RRC reconfiguration message; and transmitting an RRC connection result notification message to the first UE based on the monitoring of the second sidelink RRC reconfiguration result message.

In another aspect of the present disclosure, there is provided a processor configured to perform operations for a second UE relaying sidelink communication between a first UE and a third UE in a wireless communication system. The operations may include: receiving a first sidelink RRC reconfiguration message from the first UE; transmitting a first sidelink RRC reconfiguration complete message to the first UE in response to the first sidelink RRC reconfiguration message; transmitting a second sidelink RRC reconfiguration message to the third UE based on the transmission of the first sidelink RRC reconfiguration complete message; monitoring a second sidelink RRC reconfiguration result message to be received from the third UE during a running period of a first timer running after the transmission of the second sidelink RRC reconfiguration message; and transmitting an RRC connection result notification message to the first UE based on the monitoring of the second sidelink RRC reconfiguration result message.

In a further aspect of the present disclosure, there is provided a non-volatile computer-readable storage medium configured to store at least one computer program including instructions that, when executed by at least one processor, cause the at least one processor to perform operations for a second UE relaying sidelink communication between a first UE and a third UE. The operations may include: receiving a first sidelink RRC reconfiguration message from the first UE; transmitting a first sidelink RRC reconfiguration complete message to the first UE in response to the first sidelink RRC reconfiguration message; transmitting a second sidelink RRC reconfiguration message to the third UE based on the transmission of the first sidelink RRC reconfiguration complete message; monitoring a second sidelink RRC reconfiguration result message to be received from the third UE during a running period of a first timer running after the transmission of the second sidelink RRC reconfiguration message; and transmitting an RRC connection result notification message to the first UE based on the monitoring of the second sidelink RRC reconfiguration result message.

It is to be understood that both the foregoing general description and the following detailed description of the present disclosure are exemplary and explanatory and are intended to provide further explanation of the disclosure as claimed.

As it is apparent from the above description, the present disclosure has the following effects.

According to the above-described aspects of the present disclosure, RRC connection procedures performed by user equipments (UEs) to perform sidelink UE-to-UE relaying may be provided. In addition, RRC messages and timers according to the characteristics of each procedure may also be provided.

Other advantageous effects will be described along with specific configurations to be described below.

It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a diagram illustrating V2X communication based on pre-NR RAT and V2X communication based on NR in comparison;
FIG. 2 illustrates the structure of an NR system according to an embodiment of the present disclosure;
FIG. 3 illustrates functional split between the NG-RAN and the 5GC according to an embodiment of the present disclosure;
FIG. 4 illustrates a radio protocol architecture according to an embodiment of the present disclosure;
FIG. 5 illustrates a radio protocol architecture for SL communication according to an embodiment of the present disclosure;
FIG. 6 illustrates a synchronization source or a synchronization reference of V2X according to an embodiment of the present disclosure;
FIG. 7 is a diagram for explaining sidelink UE-to-UE relaying according to an embodiment of the present disclosure;
FIG. 8 is a diagram for explaining a method in which a source UE establishes an RRC connection with a target UE through a relay UE according to an embodiment of the present disclosure;
FIG. 9 is a diagram for explaining a method in which a source UE establishes an RRC connection with a target UE through a relay UE according to another embodiment of the present disclosure;
FIG. 10 illustrates a communication system 1 applied to the present disclosure;
FIG. 11 illustrates wireless devices applicable to the present disclosure;
FIG. 12 illustrates a vehicle or an autonomous driving vehicle applied to the present disclosure;
FIG. 13 illustrates a vehicle applied to the present disclosure;
FIG. 14 illustrates a robot applied to the present disclosure; and
FIG. 15 illustrates an AI device applied to the present disclosure.

### DETAILED DESCRIPTION OF THE DISCLOSURE

Reference will now be made in detail to the preferred embodiments of the present disclosure, examples of which are illustrated in the accompanying drawings. Wherever possible, the same reference numbers will be used throughout the drawings to refer to the same or like parts.

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1GHz, an intermediate frequency band between 1GHz and 10GHz, and a high frequency (millimeter) band of 24GHz or above.

While the following description is given mainly in the context of LTE-A or 5G NR for the clarity of description, the technical idea of an embodiment of the present disclosure is not limited thereto.

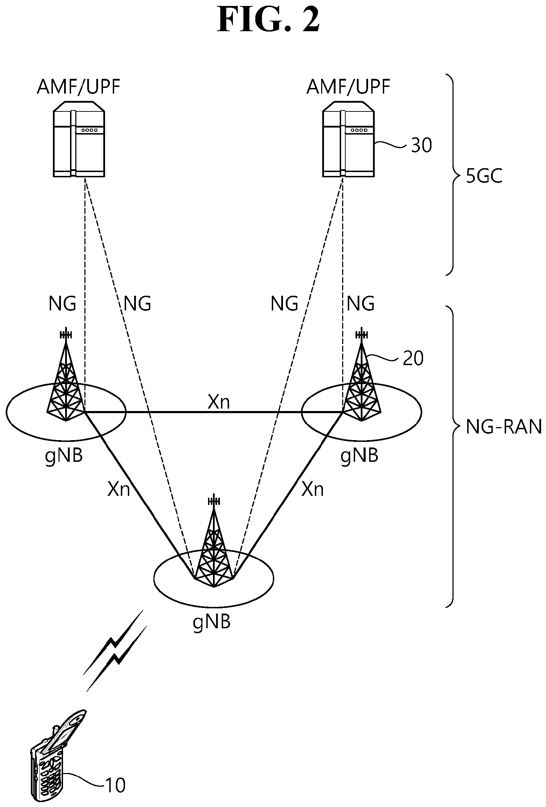

FIG. 2 illustrates the structure of an NR system according to an embodiment of the present disclosure.

Referring to FIG. 2, a next generation radio access network (NG-RAN) may include a next generation Node B (gNB) and/or an eNB, which provides user-plane and control-plane protocol termination to a UE.

In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

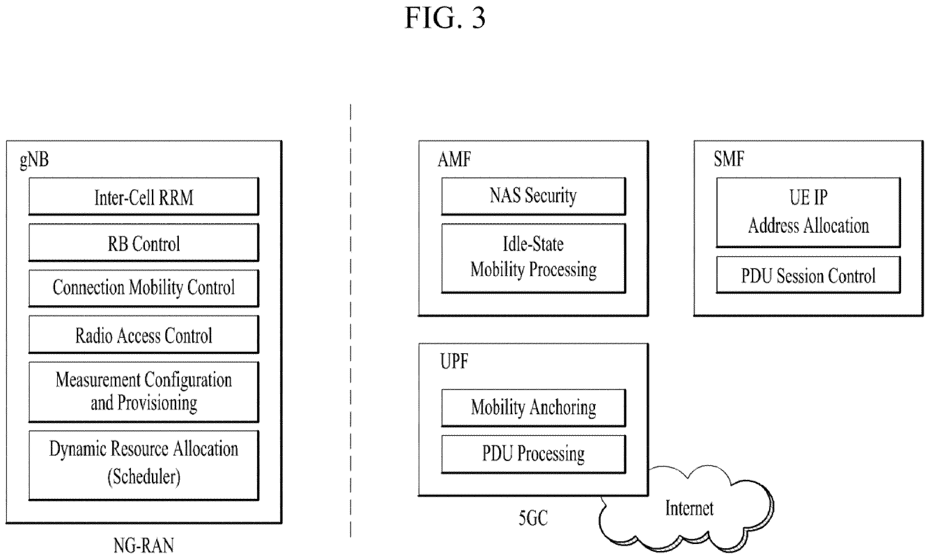

FIG. 3 illustrates functional split between the NG-RAN and the 5GC according to an embodiment of the present disclosure.

Referring to FIG. 3, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

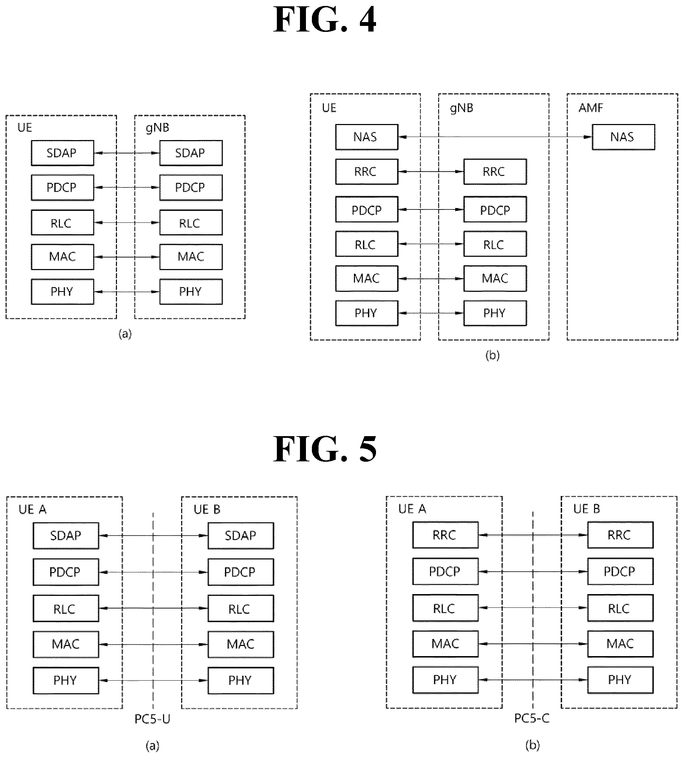

FIG. 4 illustrates a radio protocol architecture according to an embodiment of the present disclosure.

The embodiment of FIG. 4 may be combined with various embodiments of the present disclosure. Specifically, FIG. 4(a) illustrates a radio protocal architecture for a user plane, and FIG. 4(b) illustrates a radio protocal architecture for a control plane. The user plane is a protocol stack for user data transmission, and the control plane is a protocl stack for control signal transmission.

Referring to FIG. 4, the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

Now, a description will be given of sidelink (SL) communication.

FIG. 5 illustrates a radio protocol architecture for SL communication according to an embodiment of the present disclosure. Specifically, FIG. 5(a) illustrates a user-plane protocol stack in LTE, and FIG. 5(b) illustrates a control-plane protocol stack in LTE.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

Hereinafter, synchronization acquisition by an SL UE will be described.

In TDMA and FDMA systems, accurate time and frequency synchronization is essential. Inaccurate time and frequency synchronization may lead to degradation of system performance due to inter-symbol interference (ISI) and inter-carrier interference (ICI). The same is true for V2X. For time/frequency synchronization in V2X, a sidelink synchronization signal (SLSS) may be used in the PHY layer, and master information block-sidelink-V2X (MIB-SL-V2X) may be used in the RLC layer.

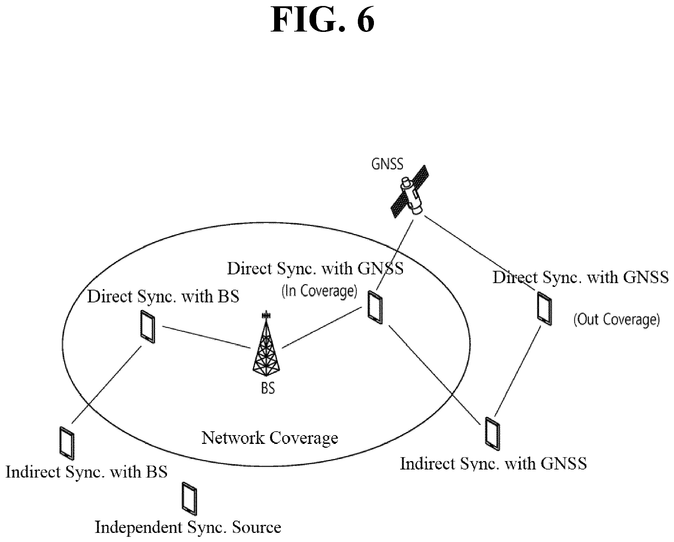

FIG. 6 illustrates a synchronization source or a synchronization reference of V2X according to an embodiment of the present disclosure. The embodiment of FIG. 6 may be combined with various embodiments of the present disclosure.

Referring to FIG. 6, in V2X, a UE may be directly synchronized with a global navigation satellite system (GNSS) or may be indirectly synchronized with the GNSS through a UE (in network coverage or out of network coverage) that is directly synchronized with the GNSS. If the GNSS is configured as a synchronization source, a UE may calculate a direct frame number (DFN) and a subframe number using coordinated universal time (UTC) and a (pre)configured DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

An SL synchronization source may be associated with a synchronization priority level. For example, the relationship between synchronization sources and synchronization priority levels may be defined as shown in Table 1 or Table 2. Table 1 or Table 2 are purely exemplary and the relationship between the synchronization sources and the synchronization priority levels may be defined in various manners.

**[Table 1]**

| Priority Level | GNSS-based Synchronization | eNB/gNB-based Synchronization |
|---|---|---|
| P0 | GNSS | eNB/gNB |
| P1 | All UEs directly synchronized with GNSS | All UEs directly synchronized with eNB/gNB |
| P2 | All UEs indirectly synchronized with GNSS | All UEs indirectly synchronized with eNB/gNB |
| P3 | All other UEs | GNSS |
| P4 | N/A | All UEs directly synchronized with GNSS |
| P5 | N/A | All UEs indirectly synchronized with GNSS |
| P6 | N/A | All other UEs |

**[Table 2]**

| Priority level | GNSS-based synchronization | eNB/gNB-based synchronization |
|---|---|---|
| P0 | GNSS | eNB/gNB |
| P1 | All UEs synchronized directly with GNSS | All UEs synchronized directly with eNB/gNB |
| P2 | All UEs synchronized indirectly with GNSS | All UEs synchronized indirectly with eNB/gNB |
| P3 | eNB/gNB | GNSS |
| P4 | All UEs synchronized directly with eNB/gNB | All UEs synchronized directly with GNSS |
| P5 | All UEs synchronized indirectly with eNB/gNB | All UEs synchronized indirectly with GNSS |
| P6 | Remaining UE(s) with lower priority | Remaining UE(s) with lower priority |

In Table 1 or Table 2, P0 may represent the highest priority, and P6 may represent the lowest priority. In Table 1 or Table 2, the BS may include at least one of a gNB or an eNB.

Whether to use GNSS-based synchronization or eNB/gNB-based synchronization may be (pre)configured. In a single-carrier operation, the UE may derive a transmission timing thereof from an available synchronization reference having the highest priority.

For example, the UE may (re)select a synchronization reference and obtain synchronization from the synchronization reference. Based on the obtained synchronization, the UE may perform SL communication (e.g., PSCCH/PSSCH transmission/reception, physical sidelink feedback channel (PSFCH) transmission/reception, S-SSB transmission/reception, reference signal transmission/reception, etc.).

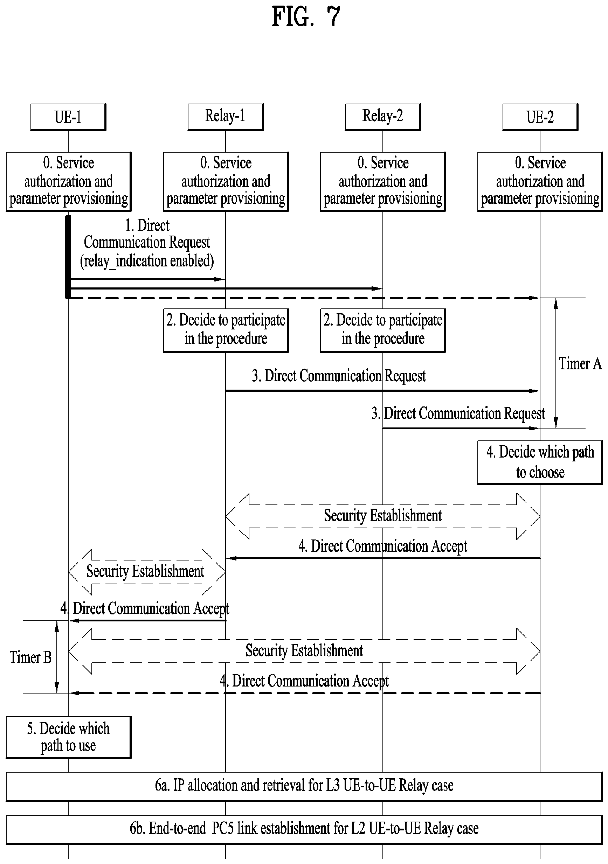

FIG. 7 is a diagram for explaining sidelink UE-to-UE relaying according to an embodiment of the present disclosure.

When a source UE desires to communicate with a target UE, the source UE may transmit a direct communication request (DCR) message to the target UE together with target UE information. If the source UE is incapable of communicating directly with the target UE, the source UE may perform a process for discovering a relay UE, and the relay UE may perform a process for discovering the target UE.

In this embodiment, it is proposed to unify such discovery and selection processes.

Referring to FIG. 7, a source UE is denoted by UE-1, a target UE is denoted by UE-2, and candidate relay UEs are denoted by Relay-1 and Relay-2. In FIG. 7, Relay 1/2 may be UEs or simplified devices for relay purposes, which are different from normal UEs.

In step 0, UEs (including Relay 1/2) may be authorized to use services provided by a UE-to-UE relay, and related parameters may be assigned to the UEs.

In step 1, UE-1 may broadcast a DCR message. In this case, the DCR message assumes that the parameter relay_indication is activated as shown in FIG. 7, and the parameter relay_indication may be a parameter indicating whether the UE-to-UE relay is supported. In addition, the DCR message according to this embodiment may include source UE information, target UE information, application IDs, and relay service codes.

In FIG. 7, the DCR message of UE-1 is shown with a dotted line to indicate that the DCR message is incapable of reaching UE-2 directly.

In step 2, Relay 1/2 may each determine whether to participate in the process. If Relay 1/2 determines to participate in the process, Relay 1/2 may broadcast a DCR message as shown in FIG. 7, but in this case, the above-described parameter relay_indication may be omitted.

The DCR message broadcast by Relay 1/2 may include source UE information, target UE information, and relay UE information. The L2 address of Relay 1/2 may be used as a source Layer-2 ID.

In step 3, UE-2 may receive the DCR message from Relay 1/2.

In step 4, UE-2 may determine a path based on the received DCR messages. If UE-2 directly receives the DCR message transmitted from UE-1, UE-2 may select any one of the DCRs received from UE-1 and Relay 1/2 as a reference.

That is, UE-2 may receive the DCR message from UE-1 corresponding to the source UE through a direct link or receive the DCR message repeated by several candidate relay UEs through an indirect link. From the perspective of UE-2, if the strength of a signal received directly and/or indirectly exceeds a predetermined threshold, one link may be selected.

However, if UE-2 detects a better signal on another link after selecting one link, the previous selection of UE-2 may not be a good choice. Considering this case, a method in which UE-2 uses a timer (timer A of FIG. 7) to select the path is proposed in an embodiment of the present disclosure.

For example, after receiving a first DCR message, UE-2 may start the corresponding timer, timer A. It is illustrated in FIG. 7 that timer A starts running after the DCR message is received from the target UE.

Until timer A expires, UE-2 may monitor DCR messages transmitted through multiple paths and measure the signal strength of the DCR messages in order to select a link determined to be the best link. After selecting the path for use, UE-2 may no longer monitor DCR messages transmitted through other paths.

In FIG. 7, it is illustrated that UE-2 selects a path to Relay-1 as an example. After selecting the path, UE-2 may transmit a direct communication accept (DCA) message to Relay-1 on the selected path, and the DCA message may be provided to UE-1 via Relay-1.

It is preferable that security configurations are established between UE-1 and Relay-1 and between Relay-1 and UE-2 before the above-described DCA message transmission as shown in FIG. 7. If a PC5 link exists between UE-1 and Relay-1 and/or between Relay-1 and UE-2, the security configurations may be omitted.

In step 5, upon receiving the DCA message, UE-1 may select a path depending on predetermined policies (for example, the direct link takes precedence if possible), signal strength, etc. In FIG. 7, it is illustrated that UE-1 receives the DCA message from Relay-1 as an example, but UE-1 may also receive DCA messages through multiple paths.

UE-1 supposed to receive DCA messages through multiple paths may also perform path selection based on a timer (timer B of FIG. 7), similarly to UE-2. For example, after receiving a first DCA message, UE-1 may start the corresponding timer, timer B. Until timer B expires, UE-1 may monitor DCA messages and measure the signal strength thereof in order to select the final path.

Similarly, after selecting one path, UE-1 may no longer monitor or select DCA messages.

Step 6a shows an L3 UE-to-UE relay case, and in this case, UE-1 and UE-2 may complete establishment of a communication link based on the selected UE-to-UE relay.

Step 6b shows an L2 UE-to-UE relay case, and in this case, UE-1 and UE-2 may establish an end-to-end PC5 link based on the relay.

As described above, when a source UE (SRC UE) selects one relay UE after selecting an indirect path, the source UE may establish an RRC connection with the selected relay UE, and the relay UE may establish an RRC connection with a target UE (destination (DST) UE).

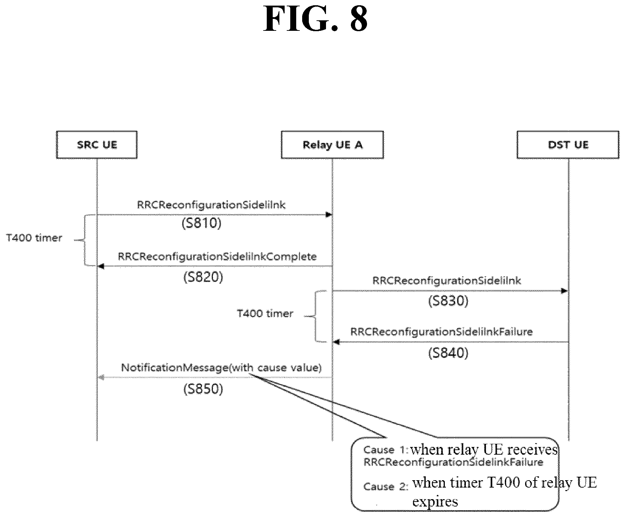

FIG. 8 is a diagram for explaining a method in which a source UE establishes an RRC connection with a target UE through a relay UE according to an embodiment of the present disclosure.

When the SRC UE selects an indirect path (e.g., relay UE A) and establishes an RRC connection with the DST UE, the SRC UE may first transmit a sidelink RRC reconfiguration message (e.g., RRCReconfigurationSidelink of 3GPP) to relay UE A (S810). In this case, as long as the "sidelink RRC reconfiguration message" is an RRC message for requesting a sidelink RRC connection, the message does not need to be interpreted as being limited to the corresponding name in the current 3GPP specifications. The sidelink RRC connection request message in this step is referred to as a first sidelink RRC connection request message to distinguish the corresponding message from other sidelink RRC connection request messages to be described later.

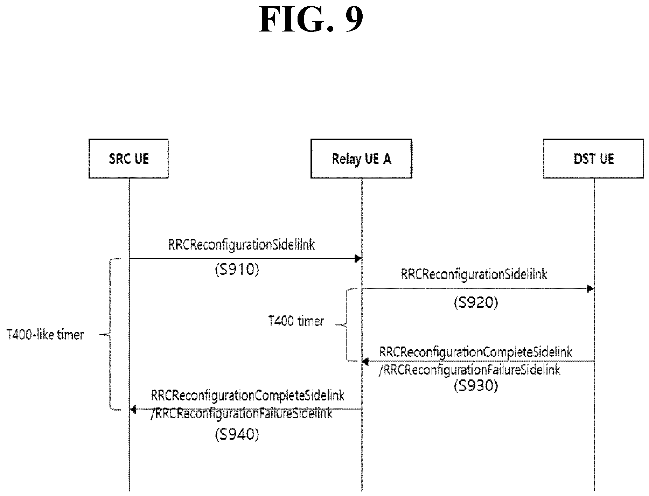

In the embodiment of FIG. 8, it is proposed that upon receiving the first sidelink RRC connection request message from the SRC UE, relay UE A immediately returns a sidelink RRC reconfiguration complete message (e.g., RRCReconfigurationSidelinkComplete of 3GPP) to the SRC UE (S820), unlike the embodiment of FIG. 9, which will be described later. The sidelink RRC reconfiguration complete message in this step is also referred to as a first sidelink RRC reconfiguration complete message to distinguish the corresponding message from other sidelink RRC reconfiguration complete messages to be described later.

The processes so far are substantially the same as the normal sidelink RRC connection procedure of 3GPP. The SRC UE may check whether the first sidelink RRC reconfiguration complete message is received based on the timer T400, which is used to establish an RRC connection.

However, the present embodiment proposes that relay UE A triggers a second sidelink RRC reconfiguration message to be transmitted to the DST UE based on transmission of the above-described first sidelink RRC reconfiguration complete message (S830).

Upon receiving the second sidelink RRC reconfiguration message, the DST UE may transmit a second sidelink RRC reconfiguration result message in response thereto (S840). In this case, the sidelink RRC reconfiguration result message is assumed to be a concept including the sidelink RRC reconfiguration complete message, which is transmitted upon the successful RRC connection, and a sidelink RRC reconfiguration failure message.

As shown in FIG. 8, the timer T400 may also be used for the RRC connection procedure between relay UE A and the DST UE.

The present embodiment proposes a procedure in which the relay UE A informs the SRC UE of information on the second sidelink RRC reconfiguration result message in addition to the RRC connection between UEs, which is referred to as an RRC connection result notification message (S850).

It is assumed that the RRC connection result notification message is an RRC message different from the above-described sidelink RRC reconfiguration complete message. The RRC connection result notification message may include cause values as shown in FIG. 8. For example, the RRC connection result notification message may include a field for indicating whether the second sidelink RRC reconfiguration result message is received from the DST UE while the timer T400 is running (Cause 1 of FIG. 8) or whether the second sidelink RRC reconfiguration result message received from the DST UE is the sidelink RRC reconfiguration failure message (Cause 2 of FIG. 8).

In this case, the sidelink established between the SRC UE and relay UE A may be released.

FIG. 9 is a diagram for explaining a method in which a source UE establishes an RRC connection with a target UE through a relay UE according to another embodiment of the present disclosure.

In the embodiment of FIG. 9, upon receiving a first sidelink RRC reconfiguration message from the SRC UE (S910), relay UE A may directly transmit a second sidelink RRC reconfiguration message to the DST UE based on the received first sidelink RRC reconfiguration message (S920), instead of directly responding to the SRC UE as shown in FIG. 8. In other words, an RRC connection between the SRC UE and the relay UE and an RRC connection between the relay UE and the DST UE may be simultaneously established, unlike FIG. 8 where the RRC connection between the SRC UE and the relay UE is first completed.

After transmitting the second sidelink RRC reconfiguration message, relay UE A may start the timer T400 as described above and then monitor reception of a first sidelink RRC reconfiguration result message from the DST UE based on the timer T400 (S930). Here, the first sidelink RRC reconfiguration result message is assumed to be a concept including a sidelink RRC reconfiguration complete message received upon success and a sidelink RRC reconfiguration failure message received upon failure as shown in FIG. 9.

After receiving the first sidelink RRC reconfiguration result message from the DST UE, relay UE A may transmit a second sidelink RRC reconfiguration result message to the SRC UE based on the first sidelink RRC reconfiguration result message (S940).

In this embodiment, it is inappropriate for the SRC UE to use the aforementioned T400 timer as it is. The reason for this is that from the perspective of the SRC UE, the simultaneous RRC connection procedure of FIG. 9 takes a long period of time, compared to when the RRC connection procedure is performed separately between the SRC UE and relay UE A and between relay UE A and the DST UE.

Accordingly, in this embodiment, a timer used by the SRC UE is assumed to be a longer timer than the timer T400, which is referred to as 'T400-like timer' as shown in FIG. 9.

When the SRC (/DST) UE operates in model, if the corresponding UE intends to report a destination L2 ID as sidelink UE information (SUI) to the BS, the corresponding UE may need to report the L2 ID of the relay UE instead of reporting the L2 ID of the final DST (/SRC) UE. This is because resources reserved for the SRC (/DST) UE may be used to transmit even to the relay UE.

On the other hand, when the connection between the SRC (/DST) UE and relay UE is PC5-RRC released, the relay UE may inform the DST (/SRC) UE of the PC5-RRC release. Alternatively, when the relay UE receives a PC5-RRC release message from the SRC (/DST) UE, the relay UE may forward the PC5-RRC release message to the DST (/SRC) UE. When an SL radio link failure (RLF) occurs between the SRC (/DST) UE and relay UE, the relay UE may also inform the DST (/SRC) UE of the SL RLF.

If the SRC (/DST) UE reselects a new relay UE, which is more suitable for relaying, after establishment of the SL RRC connection between the SRC (/DST) UE and relay UE, the SRC (/DST) UE may perform SL RRC release for the relay UE which the SRC (/DST) UE has already established the connection with. In this case, the SRC (/DST) UE may transmit an RRC message for release.

### Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

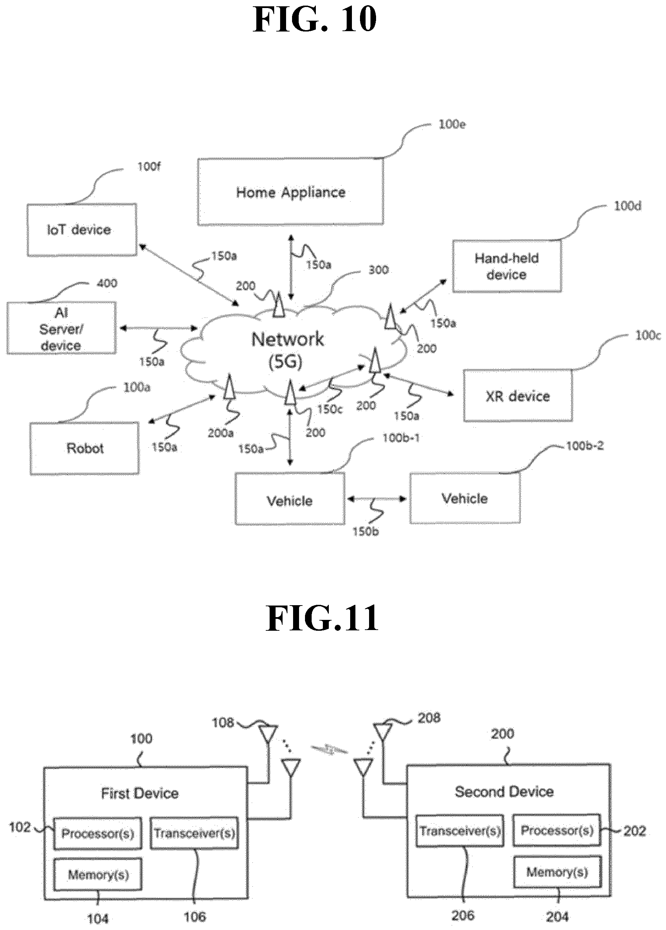

FIG. 10 illustrates a communication system 1 applied to the present disclosure.

Referring to FIG. 10, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices applicable to the present disclosure

FIG. 11 illustrates wireless devices applicable to the present disclosure.

Referring to FIG. 11, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x}.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of a vehicle or an autonomous driving vehicle applicable to the present disclosure

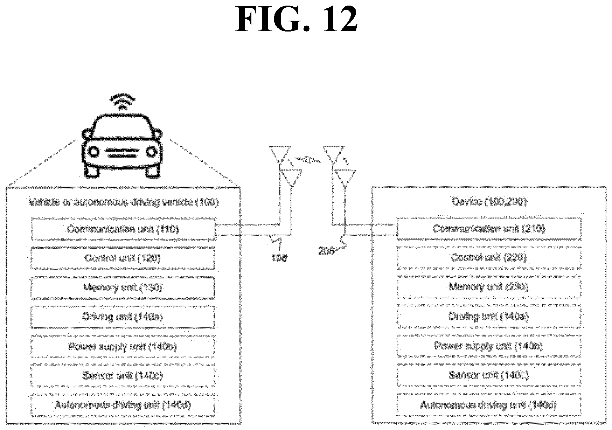

FIG. 12 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 12, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 43, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

### Examples of a vehicle and AR/VR applicable to the present disclosure

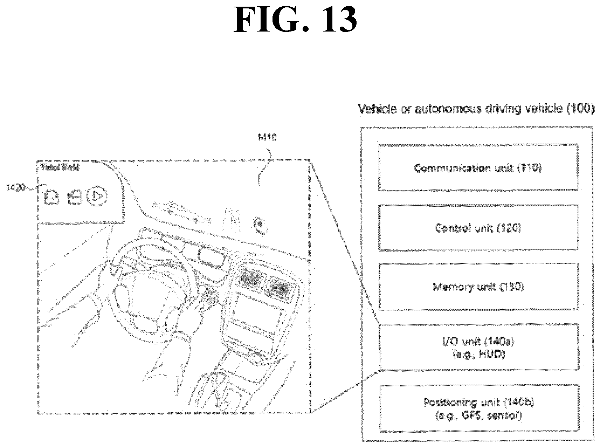

FIG. 13 illustrates a vehicle applied to the present disclosure. The vehicle may be implemented as a transport means, an aerial vehicle, a ship, etc.

Referring to FIG. 13, a vehicle 100 may include a communication unit 110, a control unit 120, a memory unit 130, an I/O unit 140a, and a positioning unit 140b. Herein, the blocks 110 to 130/140a and 140b correspond to blocks 110 to 130/140.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

### Examples of a robot applicable to the present disclosure

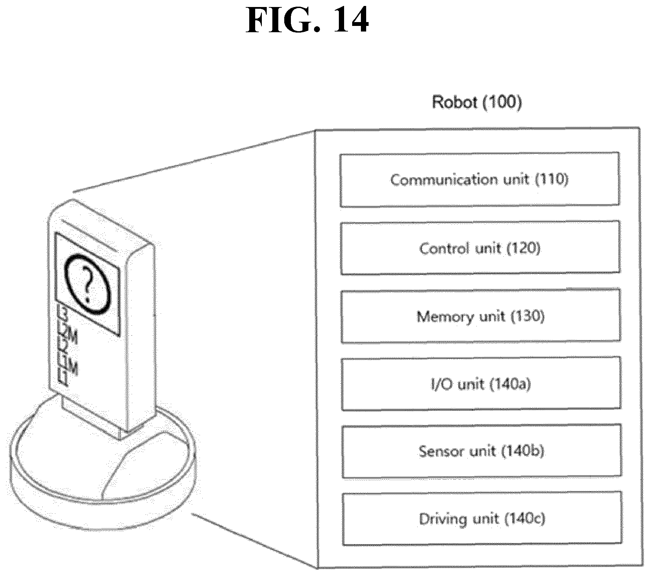

FIG. 14 illustrates a robot applied to the present disclosure. The robot may be categorized into an industrial robot, a medical robot, a household robot, a military robot, etc., according to a used purpose or field.

Referring to FIG. 14, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 14, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

### Example of AI device to which the present disclosure is applied.

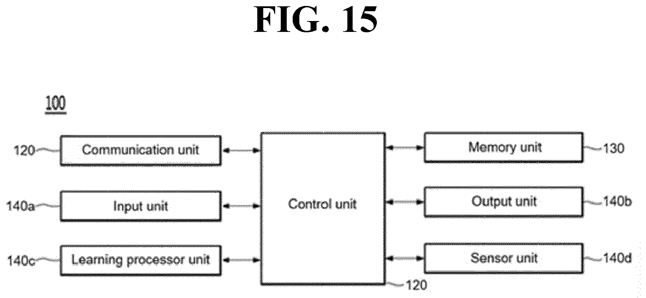

FIG. 15 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 15, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140, respectively.

The communication unit 110 may transmit and receive wired/radio signals (e.g., sensor information, user input, learning models, or control signals) to and from external devices such as other AI devices (e.g., 100x, 200, or 400 of FIG. 13) or an AI server (e.g., 400 of FIG. 13) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 13). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 13). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

As it is apparent from the above description, the present disclosure has the following effects.

According to the above-described aspects of the present disclosure, RRC connection procedures performed by user equipments (UEs) to perform sidelink UE-to-UE relaying may be provided. In addition, RRC messages and timers according to the characteristics of each procedure may also be provided.

Other advantageous effects will be described along with specific configurations to be described below.

It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

## Claims

1. A method of relaying, by a second user equipment (UE), sidelink communication between a first UE and a third UE in a wireless communication system, the method comprising:
receiving a first sidelink radio resource control (RRC) reconfiguration message from the first UE;
transmitting a first sidelink RRC reconfiguration complete message to the first UE in response to the first sidelink RRC reconfiguration message;
transmitting a second sidelink RRC reconfiguration message to the third UE based on the transmission of the first sidelink RRC reconfiguration complete message;
monitoring a second sidelink RRC reconfiguration result message to be received from the third UE during a running period of a first timer running after the transmission of the second sidelink RRC reconfiguration message; and
transmitting an RRC connection result notification message to the first UE based on the monitoring of the second sidelink RRC reconfiguration result message.

2. The method of claim 1, wherein the RRC connection result notification message is different from the first sidelink RRC reconfiguration complete message.

3. The method of claim 1 or 2, wherein the RRC connection result notification message includes a field indicating:
whether the second UE receives the second sidelink RRC reconfiguration result message from the third UE during the running period of the first timer; or
whether the second sidelink RRC reconfiguration result message received from the third UE is a sidelink RRC reconfiguration failure message.

4. The method of claim 3, wherein the first sidelink RRC reconfiguration complete message is transmitted to the first UE before expiration of the first timer running after the first UE transmits the first sidelink RRC reconfiguration message.

5. The method of any one of the preceding claims, wherein the third UE receives a plurality of direct communication request (DCR) messages from a plurality of UEs including the second UE, and
wherein the method further comprises selecting any one from among the plurality of UEs transmitting the plurality of DCR messages as the second UE.

6. The method of claim 5, wherein the third UE runs a second timer based on reception of a first DCR message among the plurality of DCR messages,
wherein the selection is performed after expiration of the second timer, and
wherein a range of the selection is limited to the plurality of DCR messages received before the expiration of the second timer.

7. The method of any one of the preceding claims, wherein the first UE receives a plurality of direct communication accept (DCA) messages from a plurality of UEs including the second UE, and
wherein the method further comprises selecting any one from among the plurality of UEs transmitting the plurality of DCA messages as the second UE.

8. The method of claim 7, wherein the first UE runs a third timer based on reception of a first DCA message among the plurality of DCA messages,
wherein the selection is performed after expiration of the third timer, and
wherein a range of the selection is limited to the plurality of DCA messages received before the expiration of the third timer.

9. The method of any one of the preceding claims, wherein based on the first UE being in a first mode operating within coverage of a base station, the first UE reports the second UE as a destination Layer-2 (L2) identifier (ID) to the base station.

10. The method of any one of the preceding claims, wherein based on receiving a sidelink RRC release message from one of the first UE and the third UE, the second UE transmits information on the sidelink RRC release message reception to the other one of the first UE and the third UE.

11. A method of relaying, by a second user equipment (UE), sidelink communication between a first UE and a third UE in a wireless communication system, the method comprising:
receiving a first sidelink radio resource control (RRC) reconfiguration message from the first UE;
transmitting a second sidelink RRC reconfiguration message to the third UE based on the first sidelink RRC reconfiguration message;
receiving a second sidelink RRC reconfiguration result message from the third UE during a running period of a first timer running after the transmission of the second sidelink RRC reconfiguration message; and
transmitting a first sidelink RRC reconfiguration result message to the first UE based on the second sidelink RRC reconfiguration result message,
wherein success or failure of the first sidelink RRC reconfiguration result message is determined depending on whether the first UE receives the first sidelink RRC reconfiguration result message before expiration of a second timer running after the first UE transmits the first sidelink RRC reconfiguration message, and
wherein the second timer is set longer than the first timer.

12. A second user equipment (UE) configured to relay sidelink communication between a first UE and a third UE in a wireless communication system, the second UE comprising:
at least one processor; and
at least one computer memory operably connectable to the at least one processor and configured to store instructions that, when executed, cause the at least one processor to perform operations comprising:
receiving a first sidelink radio resource control (RRC) reconfiguration message from the first UE;
transmitting a first sidelink RRC reconfiguration complete message to the first UE in response to the first sidelink RRC reconfiguration message;
transmitting a second sidelink RRC reconfiguration message to the third UE based on the transmission of the first sidelink RRC reconfiguration complete message;
monitoring a second sidelink RRC reconfiguration result message to be received from the third UE during a running period of a first timer running after the transmission of the second sidelink RRC reconfiguration message; and
transmitting an RRC connection result notification message to the first UE based on the monitoring of the second sidelink RRC reconfiguration result message.

13. A processor configured to perform operations for a second user equipment (UE) relaying sidelink communication between a first UE and a third UE in a wireless communication system, the operations comprising:
receiving a first sidelink radio resource control (RRC) reconfiguration message from the first UE;
transmitting a first sidelink RRC reconfiguration complete message to the first UE in response to the first sidelink RRC reconfiguration message;
transmitting a second sidelink RRC reconfiguration message to the third UE based on the transmission of the first sidelink RRC reconfiguration complete message;
monitoring a second sidelink RRC reconfiguration result message to be received from the third UE during a running period of a first timer running after the transmission of the second sidelink RRC reconfiguration message; and
transmitting an RRC connection result notification message to the first UE based on the monitoring of the second sidelink RRC reconfiguration result message.

14. A non-volatile computer-readable storage medium configured to store at least one computer program including instructions that, when executed by at least one processor, cause the at least one processor to perform operations for a second user equipment (UE) relaying sidelink communication between a first UE and a third UE, the operations comprising:
receiving a first sidelink radio resource control (RRC) reconfiguration message from the first UE;
transmitting a first sidelink RRC reconfiguration complete message to the first UE in response to the first sidelink RRC reconfiguration message;
transmitting a second sidelink RRC reconfiguration message to the third UE based on the transmission of the first sidelink RRC reconfiguration complete message;
monitoring a second sidelink RRC reconfiguration result message to be received from the third UE during a running period of a first timer running after the transmission of the second sidelink RRC reconfiguration message; and
transmitting an RRC connection result notification message to the first UE based on the monitoring of the second sidelink RRC reconfiguration result message.
